# EUROPÄISCHE PATENTSCHRIFT

(11) **EP 1 553 270 B1**
(45) Veröffentlichungstag und Bekanntmachung des Hinweises auf die Patenterteilung: **07.06.2006**
(21) Anmeldenummer: 04106276.1
(22) Anmeldetag: 03.12.2004
(51) Int. Cl.: F01N 3/20, E03B 7/10, B01D 53/90

(54) **Abgasnachbehandlungseinrichtung**
Exhaust gas aftertreatment device
Dispositif de post-traitement de gaz d'échappement

(30) Priorität: 29.12.2003 DE 10361867
(43) Veröffentlichungstag der Anmeldung: 13.07.2005
(73) Patentinhaber: HYDRAULIK-RING GMBH, 97828 Marktheidenfeld (DE)
(72) Erfinder: Meyer, Roland, 72622 Nürtingen (DE); Maisch, Dieter, 72664 Kohlberg (DE); Klotz, Stefan, 72631 Aichtal-Grötzingen (DE); Neudörfer, Gordon, 89081 Mähringen (DE)

(56) Entgegenhaltungen:
- WO-A-01/57488
- WO-A-03/027454
- WO-A-03/050416
- DE-A1- 19 729 003
- DE-C1- 19 819 579
- GB-A- 2 310 701
- US-A- 6 119 729

## Beschreibung

Die Erfindung betrifft eine Abgasnachbehandlungseinrichtung nach dem Oberbegriff des Anspruches 1.

Abgasnachbehandlungseinrichtungen dienen zum Reinigen von Abgasen in Dieselmotoren. Das Abgasnachbehandlungsmedium, das vorzugsweise eine 32,5%ige Harnstoff-Wasser-Lösung ist, wird in das Abgasrohr gespritzt, um die Stickoxidemission zu reduzieren.

Aus zwei Ausführungsbeispielen der DE 198 19 579 C1 ist bekannt, einen Druckspeicher vorzusehen, der entweder getrennt von einer Pumpe und mit einer Pumpe zu einer Baueinheit integriert, dazu dient, das Reduktionsmittel von dem Reduktionsmittelbehälter in den Druckspeicher und in die Zufuhrleitung zu pumpen. Wenn der Druck in dem Druckspeicher einen oberen Schwellwert überschreitet, wird die Pumpe ausgeschaltet. Sinkt auf Grund mehrerer, kurzer Einspritzimpulse für das Dosierventil der Druck unter einen vorgegebenen unteren Schwellenwert, so wird die Pumpe wieder eingeschaltet. Der beispielhafte Betriebsdruck soll zwischen 2 bar und 5 bar liegen. Die dort vorgestellte Prinzipanordnung versucht die Aufgabe zu lösen, die Pumpenlaufzeiten zu reduzieren. Weiterhin soll das Spritzbild des Dosierventils durch die Variation des Drucks angepasst werden. Das Patent betrachtet noch nicht die durch das Gefrieren einhergehende Problematik, weil zum Erfindungszeitpunkt der Arbeitsgruppe die weitergehenden Schwierigkeiten mangels eingehender Untersuchungen in Kraftfahrzeugen noch nicht bewusst waren.

Aus der WO 01/57488 Al ist ein Drucksensoraufbau für eine stickoxidemissionsreduzierende Einheit bei Brennkraftmaschinen bekannt, bei der mittels Membran eine Relativbewegung zwischen Drucksensorelement und Aufnahmeteil möglich ist. Hierdurch soll das Drucksensorelement beim Einfrieren geschützt werden.

In der US 6 119 729 wird das Gefrieren von Flüssigkeiten in Sonnenkollektoren diskutiert. In der GB 2 310 701 A wird vorgeschlagen, eine innere, feste Leitung mit einem wasserdichten, äußeren Überzug zu versehen, um nachgiebig gefrierendes Wasser aufzunchmen.

Zwischenzeitlich ist augenscheinlich geworden, dass SCR-Systeme auch die Schwierigkeit durch tiefe Temperaturen überwinden müssen. Das Medium gefriert bei tiefen Temperaturen und dehnt sich dabei aus. Die Volumenzunahme kann zur Beschädigung oder gar zur Zerstörung von Bauteilen der SCR-Einrichtung führen.

Der Erfindung liegt die Aufgabe zugrunde, die gattungsgemäße Abgasnachbehandlungseinrichtung so auszubilden, daß eine Beschädigung von Bauteilen durch Einfrieren des Mediums zuverlässig vermieden wird.

Diese Aufgabe wird bei der gattungsgemäßen Einrichtung erfindungsgemäß mit den kennzeichnenden Merkmalen des Anspruches 1 gelöst.

Bei der erfindungsgemäßen Abgasnachbehandlungseinrichtung kann durch den Expansions- bzw. Speicherraum die beim Einfrieren auftretende Volumenausdehnung sowie der hiermit verbundene Druckanstieg auf konstruktiv einfache Weise aufgenommen werden. Dadurch werden die Bauteile vor Überlastung und Beschädigung beim Einfrieren des Mediums einwandfrei geschützt.

Der Speicherraum wird durch mindestens ein unter dem Expansionsdruck des Abgasnachbehandlungsmediums elastisch verformbares Dehnteil begrenzt. Das Dehnteil kann napfförmig ausgebildet sein. Das Dehnteil kann auch ringartig ausgebildet sein. Auch sind Ausbildungen vorstellbar, in dem das Dehnteil napf- und ringförmig zu gleich ist. Nach einer vorteilhaften Ausgestaltung kann das Dehnteil durch eine Membran gebildet sein. Die Membran sorgt für die ausreichende Elastizität bei wiederholtem Einfrieren und Auftauen. Eine Zerstörungsgefahr des Bauteils oder des Dehnteils wird weiterhin dadurch erreicht, dass das Dehnteil mit mindestens einem Sicherungsteil am Bauteil gehalten ist. Bei deutlicher Gefrierdrucküberschreitung löst sich das Sicherungsteil. Weder das Bauteil noch das Dehnteil tragen bleibende Schäden durch das Gefrieren davon. Das Sicherungsteil kann als Ringteil, vorzugsweise als Schraubring, ausgebildet sein, der leicht befestigt werden kann, und so wenig Raum einnimmt.

Nach einem weiteren Aspekt der Erfindung kann das Dehnteil mi n-destens ein radial verlaufendes Halteteil aufweisen, das zwischen dem Bauteil und dem Sicherungsteil gehalten ist. Hierbei ist das Halteteil durch einen Ringflansch bildbar. Der Ringflansch ist leicht anformbar.

Das Dehnteil kann zwischen dem Sicherungsteil und einem Haltestück radial einspannbar sein. Der Gefrierdruck bildet sich vorzugsweise in eine auf die Einspannrichtung senkrechte Richtung aus. Damit bleibt die Einspannrichtung unbelastet.

Beispielhaft kann das Haltestück ein Ringstück, vorzugsweise ein Gewindering, sein. Auch kann das Dehnteil ein im Axialschnitt U-förmiges Ringteil sein.

Nach einer Ausgestaltungsvariante kann das Dehnteil mit einer äußeren Ringwand am Sicherungsteil und mit einer inneren Ringwand am Haltestück befestigt sein.

Vorteilhaft ist es, wenn das Haltestück unter teilweise elastischer Verformung des Dehnteiles axial gegenüber dem Sicherungsteil beweglich ist.

Auch kann dem Dehnteil eine axiale Anschlagbegrenzung (6) zugeordnet sein, hierdurch kann das Reduktionsmedium bei Aufbau seines Gefrierdrucks nur eine maximale Ausdehung einnehmen. In der räumlichen Gestaltung oder Ausformung kann die Anschlagbegrenzung napf- und/oder kappenförmig ausgebildet sein, und hierdurch eine ähnliche Form wie die übrigen Komponenten des Speicherraums einnehmen.

Beispielhaft kann die Anschlagbegrenzung mit einem radial nach außen ragenden Rand zwischen dem Bauteil und dem Dehnteil gehalten sein.

Das Dehnteil kann aus elastomerem Werkstoff, vorzugsweise Gummi, bestehen.

Weiterhin kann das Dehnteil mindestens ein Versteifungsteil aufweisen. Hierbei kann das Versteifungsteil als Ringteil ausgebildet sein, das vorzugsweise aus Metall besteht.

Die Anschlagbegrenzung kann als Federbügel ausgebildet sein, auch kann die Anschlagbegrenzung U-förmig ausgebildet sein. Der Federbügel kann insgesamt U-förmig sein.

Die Anschlagbegrenzung mag einen Ring aufweisen, der einen Halteflansch bildet.

Durch eine axiale Vorspannung des Dehnteils in Richtung auf den Kanal wird die Ausdehnrichtung des Mediums orientiert. Die Vorspannung des Dehnteils kann durch wenigstens eine Feder gegeben sein. Andere Arten der Vorspannungserzeugung sind ebenfalls vorstellbar. Die Vorspannungserzeugung lässt sich im Rahmen des Zusammenbauens durch die Wahl der geeigneten Feder bestimmen. Andere bekannte Arten der Vorspannung haben häufig den Nachteil, eine ungenaue Vorspannungserzeugung zu verursachen.

Wunschgemäß sollen möglichst günstige Abstützstellen für die Feder gewählt werden. Die Feder mit ihrem einen Ende kann an einer Aufnahme des Sicherungsteiles und mit ihrem anderen Ende an einem Federteller abgestützt sein.

Zur elektronischen Überwachung kann das Bauteil eine Aufnahme für ein Element, wie einen Sensor, aufweisen.

Das Element kann mit dem Halteteil verbunden sein Auch kann das Element in das Haltestück geschraubt sein. Das Element kann an einem elastisch verformbaren Teil der Anschlagbegrenzung abgestützt sein.Das Element kann durch das Dehnteil vorgespannt sein. Das Dehnteil kann auf dem Element sitzten. Das Dehnteil kann einen den Kanal verschließenden Schließkörper aufweisen.

Weiterhin kann der Schließkörper mit einer Membran verbunden sein, vorzugsweise einstückig mit ihr ausgebildet sein.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: im Axialschnitt eine erfindungsgemäße Abgasnachbehandlungseinrichtung mit einem Dehnteil in unverformter Lage,
- Fig. 2: eine Darstellung entsprechend Fig. 1 mit dem Dehnteil in verformter Lage,
- Fig. 3: die Einrichtung gemäß Fig. 1 in Explosivdarstellung.
- Fig. 4 bis 6 und:
- Fig. 7 bis 9: jeweils eine weitere Ausführungsform einer erfindungsgemäßen Abgasnachbehandlungseinrichtung in Darstellungen entsprechend den Fig. 1 bis 3,
- Fig. 10 bis 12: eine vierte Ausführungsform einer erfindungsgemäßen Abgasnachbehandlungseinrichtung mit einem Sensor in Darstellungen entsprechend den Fig. 1 bis 3,
- Fig. 13 bis 15: eine fünfte Ausführungsform einer erfindungsgemäßen Einrichtung mit einem Sensor in Darstellungen gemäß den Fig. 1 bis 3.

Die in den Zeichnungen dargestellten Abgasnachbehandlungseinrichtungen sind zum Reinigen von Abgasen in Dieselmotoren in LKWs oder in PKWs vorgesehen, wobei Stickoxide durch einen Katalysator reduziert werden. Hierfür wird eine Lösung, wie beispielsweise eine 32,5%ige Harnstoff-Wasser-Lösung, verwendet, die in den Abgasstrom des Dieselmotors eingeleitet wird. Diese Harnstoff-Wasser-Lösung kann bei tiefen Temperaturen einfrieren, wobei sie sich ausdehnt. Damit diese Volumen- bzw. Druckzunahme aufgenommen oder gepuffert werden kann, sind Speicherräume 5 vorgesehen, die am zu schützenden Aggregat bzw. Bauteil 2 vorgesehen sind.

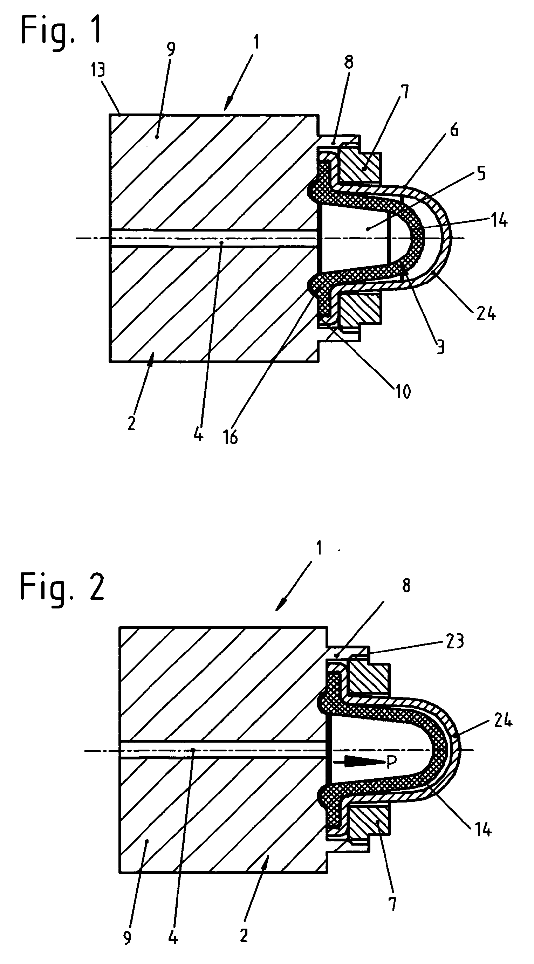

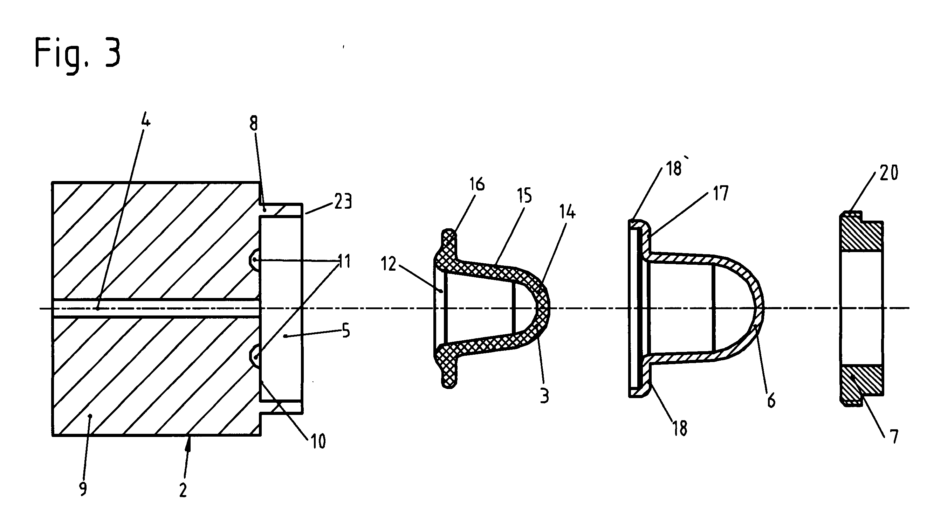

Der Speicherraum 5 ist bei der Ausführungsform gemäß den Fig. 1 bis 3 zwischen dem Bauteil 2 und einem an ihm befestigten Dehnteil 3 gebildet, das über einen Sicherungsteil 7 am Bauteil gesichert wird. Das Bauteil 2 weist einen Kanal 4 auf, der einen Grundkörper 9 des Bauteiles durchsetzt. Über die Stirnfläche 10 des Grundkörpers 9 ragt axial eine Ringwand 8, an der das Sicherungsteil 7 befestigt wird. Über den Kanal 4 kann sich ausdehnendes Medium (Harnstoff-Wasser-Lösung) nach außen in den Raum 5, der die Funktion eines Dehnungsraums haben kann, gelangen, um so einen Volumen- und Druckabbau in der Leitung zu gewährleisten. Die Ringwand 8 hat von der vorteilhaft zylindrischen Außenseite 13 des Grundkörpers 9 Abstand und ist um ein Mehrfaches kürzer als die Höhe des Grundkörpers 9. Die Stirnfläche 10 des Grundkörpers 9 weist ferner eine Ringnut 11 (Fig. 3) auf, die koaxial zum Kanal 4 und der Ringwand 8 mit etwa gleichem Abstand von diesen vorgesehen ist. Sie dient zur Aufnahme eines axial vorstehenden Ringwulstes 12 des Dehnteiles 3. Dieses ist vorteilhaft napfförmig mit einem im Querschnitt teilkreisförmig abgerundeten Boden 14 und einer leicht sich konisch nach außen erweiternden Ringwand 15 ausgebildet. Sie geht in einen radial verlaufenden Ringflansch 16 über, der am Übergang in die Ringwand 15 die Ringwulst 12 aufweist. Mit dem Ringflansch 16 liegt das Dehnteil 3 auf der Stirnfläche 10 des Bauteiles 2 auf.

Das Dehnteil 3 besteht vorzugsweise aus elastomerem Werkstoff, so daß es unter Druck einfach elastisch verformbar ist. Um eine unzulässig hohe Verformung des Dehnteiles 3 zu verhindern, wird es von einem Begrenzungsteil 6 umgeben. Es ist ebenfalls napfförmig mit einem umlaufenden Rand 17 ausgebildet, der L-förmigen Querschnitt hat. Das Begrenzungsteil 6 hat im wesentlichen gleiche Form wie das Dehnteil 3, mit dem Unterschied, daß es etwas tiefer und breiter ausgebildet ist. Mit dem radialen Abschnitt 18 liegt der Rand 17 auf dem Ringflansch 16 des Dehnteiles 3 auf, während sein axial verlaufender Randabschnitt 18' den Rand 16 des Dehnteiles 3 umgreift. Das Begrenzungsteil 6 besteht vorteilhaft aus tiefgezogenem Stahlblech.

Die Dehn- und Begrenzungsteile 3, 6 werden mit dem Sicherungsteil 7 axial gegen die Stirnfläche 10 des Bauteiles 2 verspannt. Das Sicherungsteil 7 ist als Schraubring ausgebildet, der in die Ringwand 8 geschraubt wird. Mit dem Sicherungsteil 7, das als Schraubring ausgebildet sein kann, lassen sich das Dehn- und das Begrenzungsteil 3, 6 sicher gegen die Stirnfläche 10 des Bauteiles 2 drücken. Das Sicherungsteil 7 liegt in der Einbaulage auf dem Abschnitt 18 des Begrenzungsteiles 6 auf, wodurch der Ringflansch 16 des Dehnteiles 3 unter elastischer Verformung gegen die Stirnfläche 10 des Bauteiles 2 gepreßt wird. Der Speicherraum 5 wird dadurch auch einwandfrei abgedichtet. Durch Nachziehen des Sicherungsteils 7 gegen das Begrenzungsteil 6 wird das Dehnteil 3 definiert verpresst, in dem das Begrenzungsteil 6 an seinem Rand 18' auf Block, das heist als bündiger Block, mit dem Bauteil 2 geht. In der Regel ist ein Nachziehen nicht erwünscht. Außerdem kann das Dehnteil 3 und/oder das Begrenzungsteil 6 bei Bedarf problemlos ausgetauscht werden. Die in die stirnseitige Ringnut 11 des Bauteiles 2 eingreifende Ringwulst 12 stellt eine gute Abdichtung sicher, und daß mit dem Sicherungsteil 7 ein hoher Anpreßdruck erzeugt werden kann, ohne daß das Dehnteil 3 beschädigt wird.

Bei tiefen Temperaturen, bei denen die Harnstoff-Wasser-Lösung gefriert, erfolgt eine Volumenausdehnung von etwa 8 bis 10 %. Um diese Volumenzunahme abfangen zu können, tritt die sich ausdehnende Lösung über den Kanal 4 aus der Leitung über und strömt dabei in den Speicherraum 5. Dabei wird das Dehnteil 3 unter dem anstehenden Druck in Richtung P verformt (Fig. 2). Die maximale Ausdehnung ist erreicht, wenn der Boden 14 des Dehnteiles 3 am Boden 24 des Begrenzungsteiles 6 zur Anlage kommt. Der beim Einfrieren der Lösung auftretende Volumen- und Druckanstieg kann somit auf konstruktiv einfache Weise sicher durch den Speicherraum 5 aufgenommen werden. Beschädigungen oder Überlastungen von im Flüssigkeitskreislauf befindlichen Bauteilen werden dadurch einwandfrei verhindert.

Bei steigender Temperatur kann ein damit verbundener Volumen- und Druckabfall durch Zurückströmen des Mediums bzw. der Flüssigkeit aus dem Speicherraum 5 über den Kanal 4 in die Leitung ausgeglichen werden. Hierbei nimmt das Dehnteil 3 wieder seine ursprüngliche Form (Fig. 1) an.

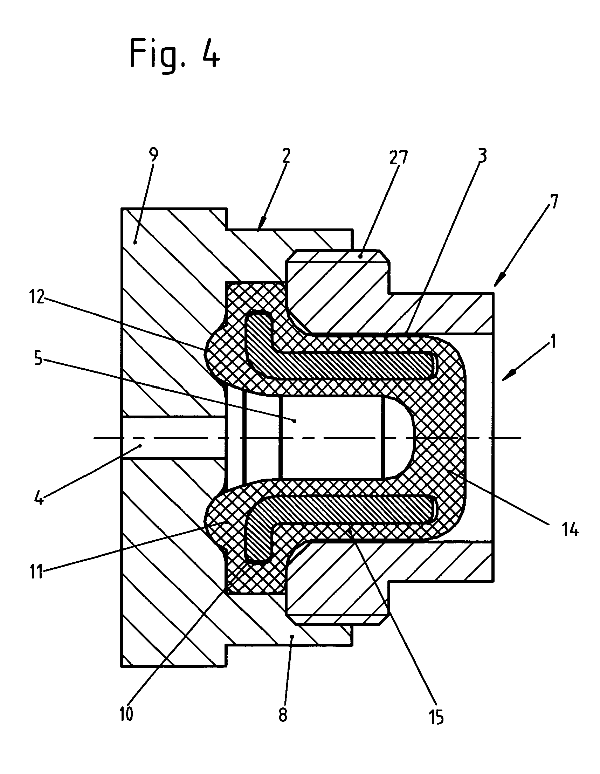

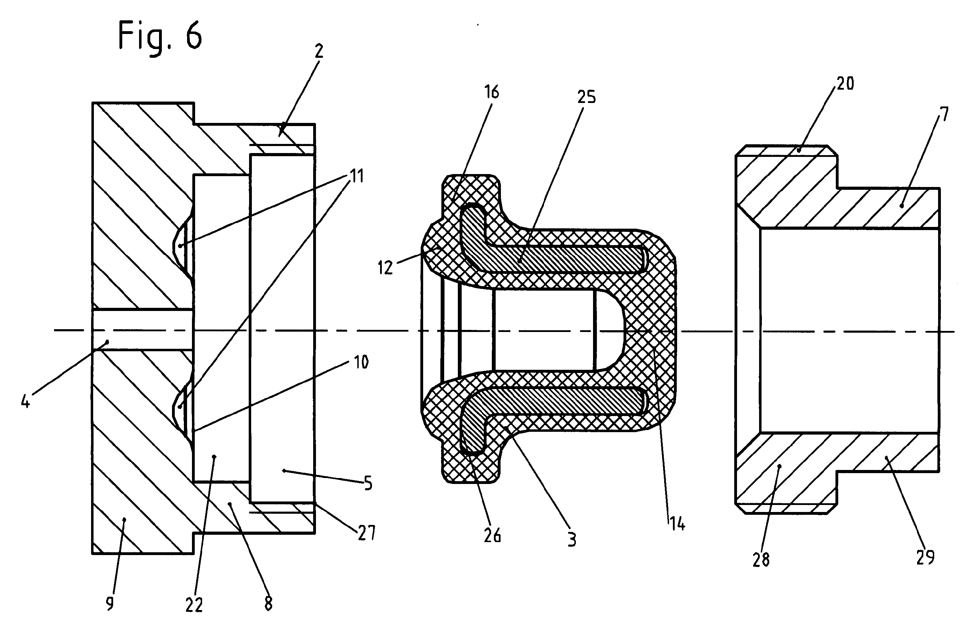

Die Ausführungsform nach den Fig. 4 bis 6 unterscheidet von der zuvor beschriebenen Ausführungsform im wesentlichen dadurch, daß kein zusätzliches Begrenzungsteil vorgesehen ist.

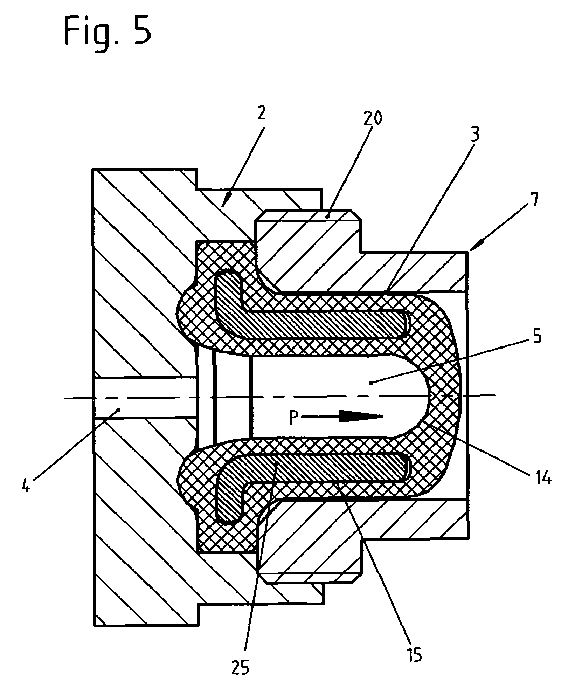

Der Bauteilgrundkörper 9 hat geringere axiale Höhe als bei der Ausführungsform nach den Fig. 1 bis 3, während die Ringwand 8 des Bauteiles 2 höher ist als beim vorigen Ausführungsbeispiel. Der Rand 8 begrenzt einen Aufnahmeraum 22, der in der an den Grundkörper 9 anschließenden Hälfte geringere lichte Weite hat als in der anderen Hälfte. In der Stirnfläche 10 des Grundkörpers 9 ist die Ringnut 11 zur Aufnahme der Ringwulst 12 des Dehnteiles 3 vorgesehen. Es ist wie bei der vorigen Ausführungsform napfförmig aus gummielastischem Werkstoff, jedoch dickwandiger ausgebildet. Zur Versteifung des Dehnteiles 3 ist in die Ringwand 15 ein Metallring 25 einvulkanisiert. Er hat einen radial nach außen ragenden Rand 26, der in den Ringflansch 16 des Dehnteiles 3 eingebettet ist. Der Boden 14 des Dehnteiles 3 besteht ausschließlich aus dem gummielastischem Material. Dadurch kann sich das Dehnteil 3 im Bereich des Bodens 14 bei einströmendem Medium zur Vergrößerung des Speicherraumes 5 axial in Richtung P elastisch ausdehnen (Fig. 5). Beim Einfrieren des Mediums können somit die auftretenden Volumen- und Druckanstiege sicher abgefangen werden, ohne daß benachbarte Einrichtungsteile beschädigt werden. Das Dehnteil 3 ist mit dem Sicherungsteil 7 am Bauteil 2 gehalten, das mit seinem Außengewinde 20 in das Gewinde 27 der Ringwand 8 geschraubt ist. Vom Sicherungsteil 7 gemäß den Fig. 1 bis 3 unterscheidet sich das vorliegende Sicherungsteil nur durch seine Abmessungen, da der das Außengewinde 20 aufweisende Ringteil 28 breiter und höher ist, während der andere Ringteil 29 dünnwandiger und ebenfalls höher ausgebildet ist als bei der vorigen Ausführungsform. Das Dehnteil 3 liegt mit seinem radialen Ringflansch 16 an der Innenwand der Ringwand 8 an. Vorteilhaft hat der Ringflansch 16 des Dehnteiles 3 einen Durchmesser, der geringfügig größer ist als der Innendurchmesser der Ringwand 8 im Bereich der Stirnfläche 10 des Bauteiles 2. Beim Einbau wird das Dehnteil 3 dadurch elastisch zusammengedrückt. In Verbindung mit dem durch den Sicherungsteil 7 auf das Dehnteil 3 ausgeübten Anpreßdruck wird eine zuverlässige Abdichtung des Speicherraumes 5 erzielt.

Der Metallring 25 verleiht dem Dehnteil 3 eine hohe Festigkeit, wenn es unter Druck gesetzt wird. Es besteht nicht die Gefahr, daß das Dehnteil 3 reißt.

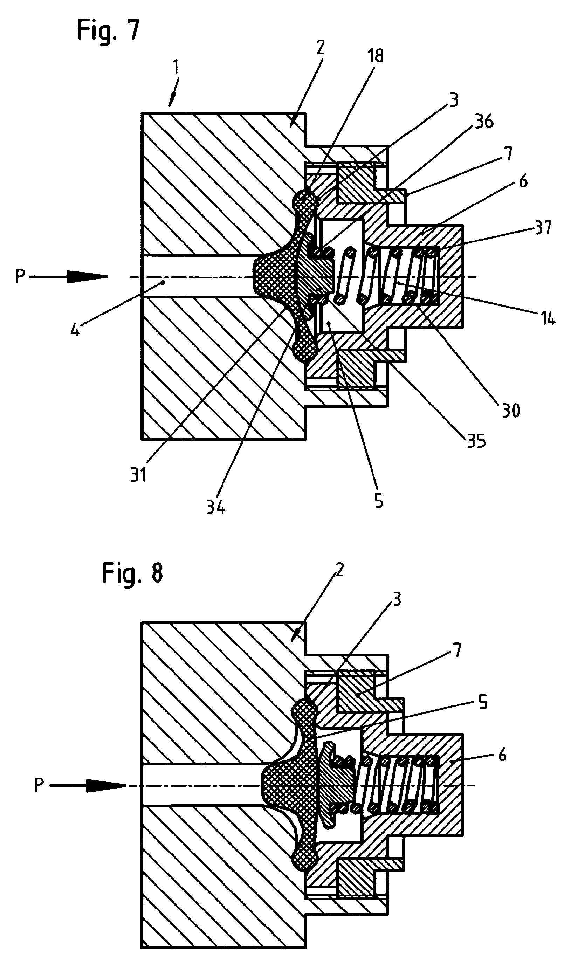

Bei der Ausführungsform nach den Fig. 7 bis 9 ist das Dehnteil 3 als Schließkörper mit einer Membran aus elastomerem Material ausgebildet, der mit einer Druckfeder 30 axial gegen die Wand 31 einer Vertiefung 61 in der Stirnfläche 10 des Bauteiles 2 gedrückt wird. In den Boden der Vertiefung 61 mündet der Kanal 4. Die Vertiefung 61 wird von der Ringnut 11 in der Stirnfläche 10 umgeben und mündet in diese. Die Wand 31 dient als Anlagefläche für das Dehnteil 3. Sie erweitert sich vom Kanal 4 aus in Richtung auf die Ringnut 11. Die Wand 31 ist im Axialschnitt stetig gekrümmt. Die Ringwand 8 des Bauteiles 2 weist über ihre gesamte Höhe das Innengewinde 27 auf, in das das Sicherungsteil 7 mit seinem Außengewinde 20 geschraubt ist. Das Sicherungsteil 7 ist im wesentlichen gleich ausgebildet wie das Sicherungsteil gemäß den Fig. 4 bis 6.

Das Dehnteil 3 hat einen Verschlußteil 32, der sich in Richtung auf sein freies Ende verjüngt. Die Mantelfläche des Verschlußteiles 32 liegt, wie Fig. 7 zeigt, in der Schließlage flächig an der Wand 31 an.

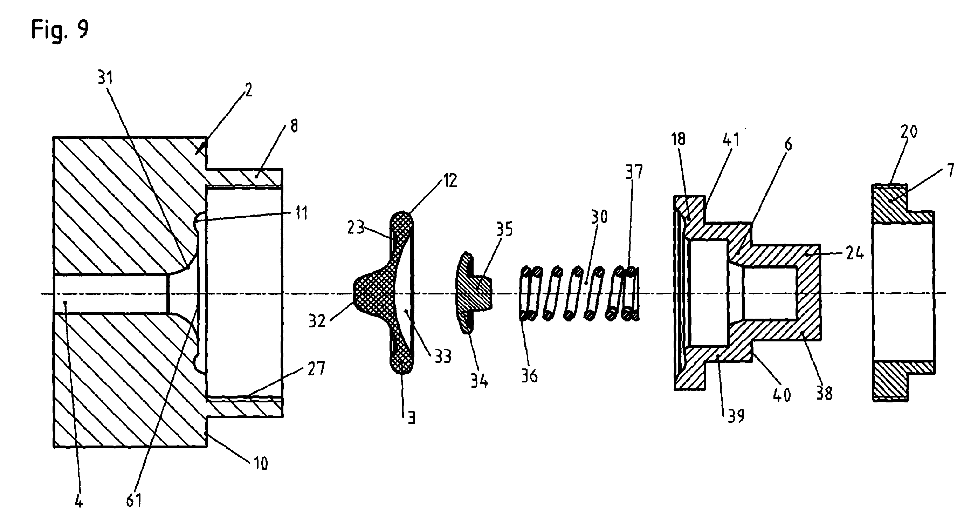

Der Verschlußteil 32 ist an seinem breiteren Ende mit einer ringförmigen Membran 23 versehen, deren Rand durch die Ringwulst 12 gebildet wird. Sie liegt in der stirnseitigen Ringnut 11 des Bauteiles 2 und wird durch den Rand 18 des Begrenzungsteiles 6 in die Ringnut 11 gedrückt. Zur Aufnahme der Ringwulst 12 ist der Abschnitt 18 an seiner der Ringwulst 12 zugewandten Seite mit einer konischen Vertiefung 62 versehen (Fig. 9). Auf dem Abschnitt 18 liegt der Sicherungsteil 7 auf, der in die Ringwand 8 geschraubt wird.

Der Verschlußteil 32 weist an seinem breiteren Ende eine stirnseitige Vertiefung 33 auf, die einen im Querschnitt konkav gekrümmten Boden hat, an dem ein in die Vertiefung 33 eingreifender Federteller 34 flächig anliegt. Von ihm steht ein Ansatz 35 ab, auf dem ein Ende 36 der Druckfeder 30 sitzt. Das andere Federende 37 stützt sich am Boden 24 des Begrenzungsteiles 6 ab. Der Boden 24 schließt einen im Innen- und Außendurchmesser verjüngten Napfteil 38 ab, der die Druckfeder 30 über einen Teil ihrer Länge umgibt und führt. Der Napfteil 38 geht in einen im Innen- und Außendurchmesser größeren Napfteil 39 über, der an seinem vom Napfteil 38 abgewandten Ende den radial nach außen ragenden Randabschnitt 18 aufweist. Die Napfteile 38, 39 und der Randabschnitt 18 gehen jeweils über eine radiale Schulter 40 bzw. 41 ineinander über. In montierter Lage stützt sich das Sicherungsteil 7 auf der Schulter 41 ab.

Die Druckfeder 30 ist so ausgebildet, daß das Dehnteil 3 bei Systemdruck nicht gegen die Federkraft von der Wand 31 abhebt. Erst wenn die Harnstoff-Wasser-Lösung bei tieferen Temperaturen beginnt einzufrieren und der Druck über den maximalen Arbeitsdruck ansteigt, wird das Dehnteil 3 in Richtung P gegen die Kraft der Druckfeder 30 von der Wand 31 abgehoben (Fig. 8). Dabei wird die Membran 23 elastisch gebogen. Zwischen dem Dehnteil 3 und dem Bauteil 2 wird ein Speicherraum 5 gebildet, in den das Medium eindringen kann. Das Dehnteil 3 wird bei dieser Druckbeaufschlagung mit seiner Ringwulst 12 in der Ringnut 11 durch das Begrenzungsteil 6 festgeklemmt, so daß sichergestellt ist, daß kein Medium aus dem Speicherraum 5 nach außen gelangen kann.

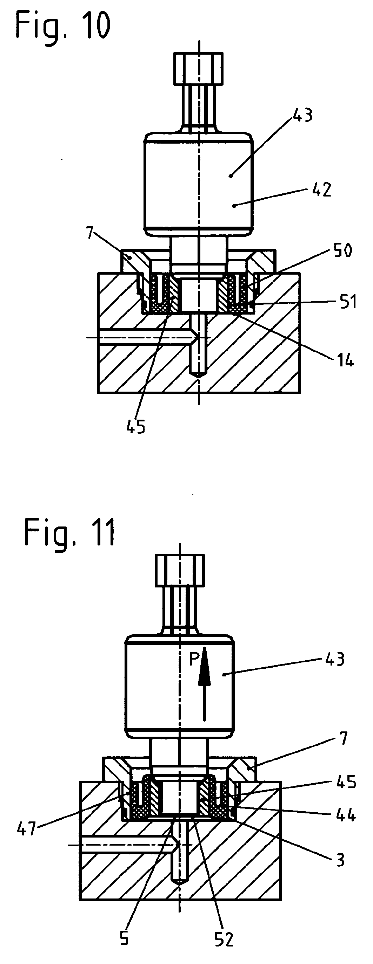

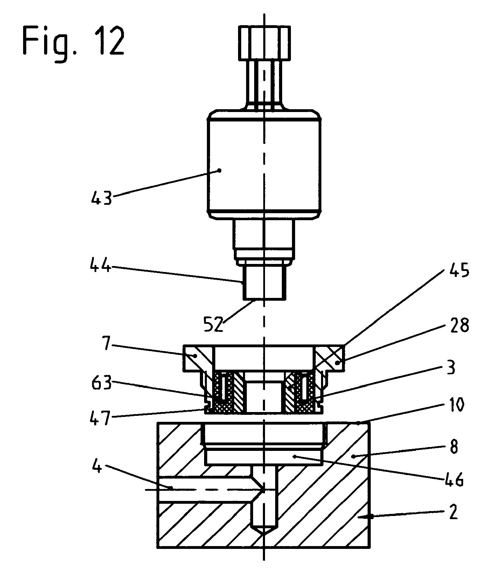

Bei der Ausführungsform nach den Fig. 10 bis 12 ist am Bauteil 2 ein an sich bekannter Drucksensor 42 angeordnet. Dieser mißt den Druck der Harnstoff-Wasser-Lösung in der Abgasreduziereinrichtung 1. Der Sensor 42 hat ein Gehäuse 43 mit einem Außengewindeabschnitt 44, mit dem der Sensor in einen Haltering 45 aus Metall geschraubt ist. Auf ihn ist das ringförmige Dehnteil 3 aufvulkanisiert, das im Querschnitt zum Beispiel U-förmig ausgebildet und in den Sicherungsteil 7 einvulkanisiert ist. Die druck- und mediumsdichte Verbindung zwischen dem Sensor 42, dem Haltering 45 und dem Sicherungsteil 7 kann auch auf jede andere geeignete Weise erfolgen.

Das Bauteil 2 hat eine zentrale Vertiefung 46, die in der Stirnfläche 10 des Bauteiles 2 liegt. Die Vertiefung 46 wird von der Ringwand 8 begrenzt, in die der Sicherungsteil 7 geschraubt wird. In die Vertiefung 46 mündet der Kanal 4, der an der Mantelfläche des Bauteiles 2 austritt.

Das Dehnteil 3 ist mit seiner radial äußeren Ringwand 50 an der Innenseite des Sicherungsteils 7 und mit seiner inneren Ringwand 51 an der Außenwand des Halteringes 45 befestigt (Fig. 10).

Im Normalbetrieb liegt das Dehnteil 3 mit seinem die Ringwände 50, 51 verbindenden Boden 14 am Boden der Vertiefung 46 an. Der Sensor 42 ist so weit in den Haltering 45 geschraubt, daß er ebenfalls am Boden der Vertiefung 46 anliegt (Fig. 10).

Das Sicherungsteil 7 hat einen endseitigen radialen Ringteil 28, mit dem er in der Einbaulage auf der Ringwand 8 aufliegt. Nahe dem freien Ende ist das Sicherungsteil 7 außenseitig mit einer Ringnut 63 zur Aufnahme einer Ringdichtung 47 versehen, die in der Einbaulage dichtend an der Seitenwand der Vertiefung 46 anliegt.

Anstelle des Drucksensors 42 kann am Bauteil 2 auch ein beliebig anderes Element der Abgasnachbehandlungseinrichtung befestigt sein, das beim Einfrieren der Lösung beschädigt oder zerstört werden könnte.

Wenn beim Einfrieren der Harnstoff-Wasser-Lösung durch die Zunahme des Volumens der Innendruck in der flüssigkeitsführenden Leitung ansteigt, wird der Sensor 42 vor Erreichen des Berstdruckes zusammen mit seinem Haltering 45 und der inneren Ringwand 51 des Dehnteiles 3 in Richtung P (Fig. 11) nach außen ausgelenkt, wobei das Dehnteil 3 die in Fig. 11 dargestellte verformte Stellung einnimmt.

Aufgrund dieser elastischen Verformung hebt der Ringboden 14 des Dehnteiles 3 zusammen mit dem Haltering 45 und dem Sensor 42 vom Boden der Vertiefung 46 ab. Mit der äußeren Ringwand 50 wird das Dehnteil am Sicherungsteil 7 gehalten. In dem beim Abheben des Dehnteiles 3 zwischen dem Boden der Vertiefung 46 und dem Boden 14, auch als Dehnteilboden bezeichnet, sowie der Stirnfläche 52 des Gewindeabschnittes 44 des Sensors 42 gebildeten Speicher- bzw. Expansionsraum 5 kann sich die Lösung ungehindert ausdehnen. Dadurch wird eine Beschädigung des Sensors 42 auf einfache Weise sicher verhindert. Bei nachlassender Temperatur und zurückgehendem Druck nimmt das Dehnteil 3 wieder die in Fig. 10 dargestellte Ausgangslage ein, wobei der Sensor 42 entsprechend entgegen Richtung P bis zur Anlage am Boden der Vertiefung 46 mitgenommen wird.

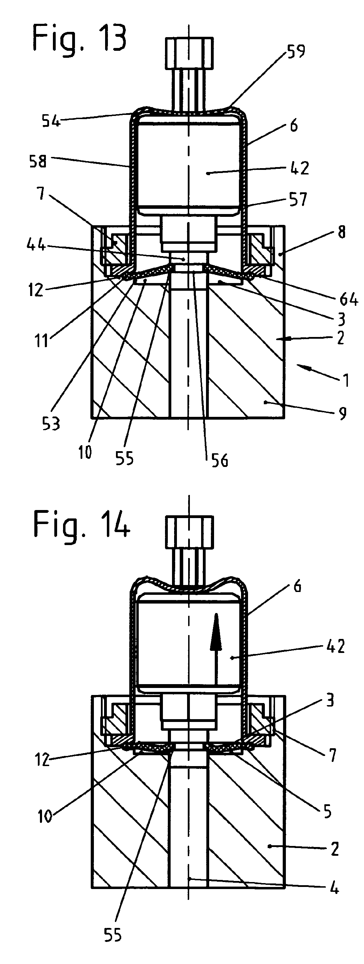

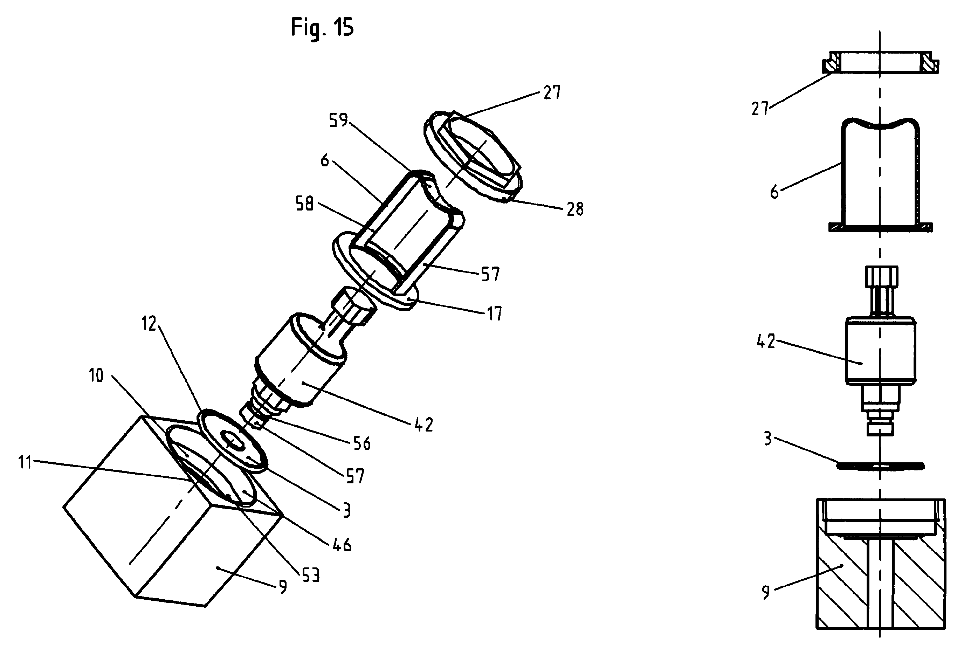

Bei der Ausführungsform nach den Fig. 13 bis 15 weist die Einrichtung 1 wieder einen Sensor 42 auf, der am Bauteil 2 gehalten wird. Zur Vermeidung einer Beschädigung ist am Sensor 42 das Dehnteil 3 befestigt, das mit dem Begrenzungsteil 6 am Bauteil 2 gesichert wird. Das Bauteil 2 hat einen quaderförmigen Grundkörper 9 mit einer zentralen stirnseitigen Vertiefung 46, in die der Kanal 4 mündet. Das Bauteil 2 stellt einen Ausschnitt (Ausbruch) eines zu schützenden HWL führenden Funktionsgehäuses, z. B. eines Pumpenblockes, eines Versorgungsgehäuses u. s. w., dar. Der Boden 64 der Vertiefung 46 geht über eine Schulter 53 in die ringförmige Stirnseite 10 über. Der Boden 64 weist die Ringnut 11 zur Aufnahme der Ringwulst 12 des tellerförmig ausgebildeten Dehnteiles 3 aufweist. Das Dehnteil 3 ist als Ringscheibe mit der umlaufenden Wulst 12 ausgebildet und besteht aus elastomerem Material. Mit seinem inneren Rand 55 ragt das Dehnteil 3 in eine Ringnut 56 eines verjüngten Endes 57 des Sensors 42. Vorzugsweise ist das Dehnteil 3 mit großem Krümmungsradius im Querschnitt S-förmig gebogen, wodurch eine hohe Elastizität gewährleistet ist.

Die Ringwulst 12 des Dehnteiles 3 wird mit dem als Ring ausgebildeten Rand 17 des Begrenzungsteiles 6 in der Ringnut 11 gesichert. Das Begrenzungsteil 6 ist als U-förmiger Bügel ausgebildet, dessen Schenkel 57, 58 senkrecht vom Ringrand 17 abstehen. Der die Schenkel 57, 58 verbindende Quersteg 59 des Begrenzungsteiles 6 ist in Richtung auf den Rand 17 teilkreisförmig gekrümmt. Der Sensor 42 stützt sich an der Innenseite 54 des federelastischen Quersteges 59 ab.

Das Begrenzungsteil 6, in Form eines Bügels, wird mit dem Sicherungsteil 7, der in die Ringwand 8 geschraubt wird, am Bauteil 2 gehalten. Das Sicherungsteil 7 liegt auf dem Rand 17, in Form eines Ringrandes, des Begrenzungsteils 6 auf und drückt ihn gegen den Boden 64 der Vertiefung 46. Die Ringwulst 12 des Dehnteiles 3 wird hierbei elastisch zusammengedrückt, so daß eine einwandfreie Abdichtung erreicht wird.

Das Dehnteil 3 sitzt unter elastischer Vorspannung in der Ringnut 56, so daß über den Kanal 4 eindringendes Medium nicht nach außen gelangen kann.

Steigt beim Einfrieren der Harnstoff-Wasser-Lösung das Volumen und der Druck der Lösung an, wird das Dehnteil 3 in Richtung P aus seiner Ausgangslage nach Fig. 13 in die in Fig. 14 dargestellte Lage axial ausgedehnt. Bei der axialen elastischen Verformung des membranförmigen Dehnteiles 3 wird der Sensor 42 entsprechend mitgenommen. Zwischen dem Dehnteil 3 und der Stirnseite 10 des Bauteiles 2 wird der Expansions- und Speicherraum 5 gebildet. Der auf den Sensor 42 wirkende Druck wird durch das definierte Nachgeben des federelastischen Quersteges 59 so verringert, daß der Berstdruck des Sensors nicht erreicht wird. Dadurch kann der Sensor 42 auf konstruktiv einfache Weise vor Beschädigung geschützt werden.

### Bezugszeichenliste:

| | |
|---|---|
| 1 | Einrichtung |
| 2 | Bauteil |
| 3 | Dehnteil |
| 4 | Kanal |
| 5 | Raum bzw. Speicherraum |
| 6 | Begrenzungsteil |
| 7 | Sicherungsteil |
| 8 | Ringwand |
| 9 | Grundkörper bzw. Bauteilgrundkörper |
| 10 | Stirnfläche |
| 11 | Ringnut |
| 12 | Wulst oder Ringwulst |
| 13 | Außenseite, vorteilhaft zylindrisch |
| 14 | Boden |
| 15 | Ringwand |
| 16 | Ringflansch |
| 17 | Rand |
| 18 | Abschnitt |
| 18' | Randabschnitt |
| 20 | Außengewinde |
| 22 | Aufnahmeraum |
| 23 | Membran |
| 24 | Boden |
| 25 | Metallring |
| 26 | Rand |
| 27 | Gewinde bzw. Innengewinde |
| 28 | Ringteil |
| 29 | Ringteil |
| 30 | Druckfeder |
| 31 | Wand |
| 32 | Verschlussteil |
| 33 | Vertiefung, stirnseitig |
| 34 | Federteller |
| 35 | Ansatz |
| 36 | Ende der Druckfeder |
| 37 | Federende |
| 38 | Napfteil |
| 39 | Napfteil |
| 40 | Schulter |
| 41 | Schulter |
| 42 | Sensor, z. B. Drucksensor |
| 43 | Gehäuse |
| 44 | Außengewindeabschnitt |
| 45 | Haltering |
| 46 | Vertiefung |
| 47 | Ringdichtung |
| 50 | Ringwand |
| 51 | Ringwand |
| 52 | Stirnfläche |
| 54 | Innenseite |
| 55 | Rand |
| 56 | Ringnut |
| 57 | Schenkel, beispielhaft in Form eines verjüngenden Endes |
| 58 | Schenkel |
| 59 | Quersteg |
| 61 | Vertiefung |
| 62 | Vertiefung |
| 63 | Ringnut |
| 64 | Boden |
| P | Richtung |

## Patentansprüche

1. Abgasnachbehandlungseinrichtung (1) für Dieselmotoren von Fahrzeugen, insbesondere Kraftfahrzeugen, mit wenigstens einer Zu- bzw. Förderleitung für Abgasnachbehandlungsmedium, vorzugsweise 32,5%ige Harnstoff-Wasser-Lösung, und mit wenigstens einem Bauteil (2), das wenigstens einen Kanal (4) für das Abgasnachbehandlungsmedium aufweist,
wobei der Kanal (4) des Bauteiles (2) in wenigstens einen Speicherraum (5) mündet, der am Bauteil (2) vorgesehen ist,
**dadurch gekennzeichnet, dass**
der Speicherraum (5) durch mindestens ein, unter dem Exparisionsdruck der beim Einfrieren auftretenden volurnensausdehnung des Abgasnachbehandlungsmediums, elastisch verformbares Dehnteil (3) begrenzt ist, wobei das Dehnteil (3) erst bei einem Druck, der über dem maximalen Arbeitsdruck ansteigt, die durch das Einfrieren erzeugte Volumen- bzw. Druckzunahme puffert.

2. Einrichtung nach Anspruch 1,
**dadurch gekennzeichnet, daß** der Speicherraum (5) ein Expansionsraum ist, der vorzugsweise die Einspeicherung von Volumen bei Erreichen eines Gefrierdrucks ermöglicht, insbesondere durch ein Verformen eines elastischen Dehnteils (3), das bei Überschreitung eines Betriebsdrucks verformbar ist.

3. Einrichtung nach einem der vorhergehenden Ansprüche,
**dadurch gekennzeichnet, dass** der Kanal (4) durch einen ein Dehnteil (3) umfassenden Verschluss begrenzt wird.

4. Einrichtung nach einem der vorhergehenden Ansprüche,
**dadurch gekennzeichnet, daß** bei zurückgehendem Druck, insbesondere zurückgehendem Gefrierdruck der Harnstoff-Wasser-Lösung, die Ausgangslage durch das Dehnteil (3) einnehmbar ist.

5. Einrichtung nach einem der Ansprüche 2 bis 4,
**dadurch gekennzeichnet, daß** bei tiefen Temperaturen, bei denen die Harnstoff-Wasser-Lösung einfrieren kann, die Volumen- bzw. Druckzunahme im Expansionsraum aufgenommen oder gepuffert werden kann.

6. Einrichtung nach einem der Ansprüche 2 bis 5,
**dadurch gekennzeichnet, daß** das Dehnteil (3) im Normalbetrieb am Boden, insbesondere einer Vertiefung, anliegt..

7. Einrichtung nach einem der vorhergehenden Ansprüche,
**dadurch gekennzeichnet, dass** das Dehnteil (3) bei einem Systemdruck nicht von einer Wand (31) abhebt..

8. Einrichtung nach einem der Ansprüche 2 bis 7,
**dadurch gekennzeichnet, daß** das Dehnteil (3) durch eine Membran gebildet ist.

9. Einrichtung nach einem der vorhergehenden Ansprüche,
**dadurch gekennzeichnet, dass** das Dehnteil (3) aus elastomerem Werkstoff, vorzugsweise ein gummiartiger Werkstoff wie Gummi, besteht.

10. Einrichtung nach einem der vorhergehenden Ansprüche,
**dadurch gekennzeichnet, dass** das Bauteil (2) eine Aufnahme (46) für ein Element (42), wie einen Sensor, aufweist.

11. Einrichtung nach einem der Ansprüche 2 bis 10,
**dadurch gekennzeichnet, dass** das Dehnteil (3) einen den Kanal (4) verschließenden Schließkörper (32) aufweist.

## Claims

1. Exhaust gas after-treatment device (1) for diesel engines of vehicles, in particular motor vehicles, having at least one supply and/or feed line for exhaust gas after-treatment medium, preferably 32.5% urea-water solution, and having at least one component (2), which has at least one channel (4) for the exhaust gas after-treatment medium,
wherein the channel (4) of the component (2) opens out into a storage space (5), which is provided on the component (2),
**characterized in that**
the storage space (5) is delimited by at least one expansion part (3), which is elastically deformable under the expansion pressure of the volumetric expansion of the exhaust gas after-treatment medium that occurs during freezing, wherein the expansion part (3) only in the event of a pressure, which rises above the maximum working pressure, buffers the volume- and/or pressure increase generated by freezing.

2. Device according to claim 1,
**characterized in that** the storage space (5) is an expansion space that preferably allows the storage of volumes upon attainment of a freezing pressure, in particular through deformation of an elastic expansion part (3) that is deformable when an operating pressure is exceeded.

3. Device according to one of the preceding claims,
**characterized in that** the channel (4) is delimited by a closure comprising an expansion part (3).

4. Device according to one of the preceding claims,
**characterized in that**, as the pressure drops, in particular as the freezing pressure of the urea-water solution drops, the initial position is adoptable by the expansion part (3).

5. Device according to one of claims 2 to 4,
**characterized in that** at low temperatures, at which the urea-water solution may freeze, the volume- and/or pressure increase in the expansion chamber may be absorbed and/or buffered.

6. Device according to one of claims 2 to 5,
**characterized in that** the expansion part (3) during normal operation lies against the base, in particular of a recess.

7. Device according to one of the preceding claims,
**characterized in that** the expansion part (3), given a system pressure, does not lift off a wall (31).

8. Device according to one of claims 2 to 7,
**characterized in that** the expansion part (3) is formed by a diaphragm.

9. Device according to one of the preceding claims,
**characterized in that** the expansion part (3) is made of elastomeric material, preferably a rubber-like material such as rubber.

10. Device according to one of the preceding claims,
**characterized in that** the component (2) has a receiver (46) for an element (42), such as a sensor.

11. Device according to one of claims 2 to 10,
**characterized in that** the expansion part (3) has a closure body (32), which closes the channel (4).

## Revendications

1. Dispositif de post-traitement de gaz d'échappement (1) pour les moteurs diesel de véhicules, notamment de véhicules automobiles, avec au moins une conduite d'amenée ou d'alimentation pour moyen de post-traitement de gaz d'échappement, de préférence une solution contenant 32,5 % d'eau dure et avec au moins un composant (2) comportant au moins un canal (4) pour le moyen de post-traitement de gaz d'échappement,
le canal (4) du composant (2) débouchant dans au moins une chambre de retenue (5) prévue au niveau du composant (2),
**caractérisé en ce que** la chambre de retenue (5) est délimitée par au moins une partie expansible (3), élastiquement déformable sous la pression d'expansion de la dilatation volumique du moyen de post-traitement de gaz d'échappement se produisant lors du gel, la partie expansible (3) n'augmentant qu'à une pression supérieure à la pression de travail maximale et ladite dilatation volumique amortissant l'augmentation de pression ou de volume provoquée par le gel.

2. Dispositif selon la revendication 1,
**caractérisé en ce que** la chambre de retenue (5) est une chambre d'expansion qui permet de préférence de stocker des volumes lorsque l'on atteint une pression de congélation, notamment par déformation d'une partie expansible (3) élastique pouvant être déformée lorsqu'une pression d'exploitation est dépassée.

3. Dispositif selon l'une quelconque des revendications précédentes,
**caractérisé en ce que** le canal (4) est délimité par une fermeture entourant la partie expansible (3).

4. Dispositif selon l'une quelconque des revendications précédentes,
**caractérisé en ce que** lorsque la pression diminue, notamment lorsque la pression de congélation de la solution d'eau dure diminue, la partie expansible (3) peut reprendre sa position de départ.

5. Dispositif selon l'une quelconque des revendications 2 à 4,
**caractérisé en ce qu'**aux basses températures auxquelles la solution d'eau dure peut geler, l'augmentation de pression ou de volume dans la chambre d'expansion peut être absorbée ou amortie.

6. Dispositif selon l'une quelconque des revendications 2 à 5,
**caractérisé en ce que** la partie expansible (3) se situe au niveau du plancher en fonctionnement normal, notamment au niveau d'un renfoncement.

7. Dispositif selon l'une quelconque des revendications précédentes,
**caractérisé en ce que** la partie expansible (3) ne décolle pas d'une paroi (31) dans un système de pression.

8. Dispositif selon l'une quelconque des revendications 2 à 7,
**caractérisé en ce que** la partie expansible (3) prend la forme d'une membrane.

9. Dispositif selon l'une quelconque des revendications précédentes,
**caractérisé en ce que** la partie expansible (3) est fabriquée à partir d'un matériau élastomère, de préférence un matériau de type caoutchouteux tel que le caoutchouc.

10. Dispositif selon l'une quelconque des revendications précédentes,
**caractérisé en ce que** le composant (2) comporte un évidement (46) prévu pour un élément (42) tel un capteur.

11. Dispositif selon l'une quelconque des revendications 2 à 10,
**caractérisé en ce que** la partie expansible (3) comporte un corps de fermeture (32) fermant le canal (4).
